# EUROPÄISCHE PATENTSCHRIFT

(11) **EP 2 656 725 B1**
(45) Veröffentlichungstag und Bekanntmachung des Hinweises auf die Patenterteilung: **18.03.2015**
(21) Anmeldenummer: 13152307.8
(22) Anmeldetag: 23.01.2013
(51) Int. Cl.: A01D 90/04, B21D 53/84, A01F 15/10, B21D 53/60

(54) **Verfahren zur Herstellung einer Schaltwelle**
Method for manufacturing a selector shaft
Procédé de fabrication d'un arbre de commande

(30) Priorität: 23.04.2012 DE 102012007895
(43) Veröffentlichungstag der Anmeldung: 30.10.2013
(73) Patentinhaber: Usines Claas France S.A.S, 57140 Metz (FR)
(72) Erfinder: Altmeyer, Marc, 57320 Alzing (FR)
(74) Vertreter: Belda, Stefan Johannes

(56) Entgegenhaltungen:
- EP-A1- 0 341 508
- WO-A1-01/98020
- DE-A1- 10 113 952
- GB-A- 489 312

## Beschreibung

Landwirtschaftliche Ballenpressen oder Ladewagen sind oftmals mit einer Schneidvorrichtung - auch "Schneidwerk" genannt - für der Maschine zugeführtes Halm- und/oder Blattgut (im Folgenden vereinfacht: "Erntegut") ausgestattet, um dieses zu unterschiedlichen Zwecken zu zerkleinern. Auch andere landwirtschaftliche Erntemaschinen können mit einer solchen Schneidvorrichtung ausgestattet sein.

Die Schneidvorrichtung ist dabei jeweils in einem vom Erntegut durchströmten Kanal der Ballenpresse, des Ladewagens oder sonstigen landwirtschaftlichen Maschine so angeordnet, dass das Erntegut auf eine in den Kanal hineinragende Anzahl feststehender Messer zu gefördert wird, um in Kontakt mit den Messerkanten geschnitten zu werden. Im Fall von Ballenpressen und Ladewagen wird die Förderung des Ernteguts im Wirkungsbereich der Messer insbesondere durch einen Rotor bewirkt, der sich um eine quer zur Gutstromrichtung liegende Achse dreht und in Axialrichtung mit einer Vielzahl von Rotorsternen ausgestattet ist. Die Rotorsterne sind in der Regel leicht verdreht zueinander auf der Achse montiert, um eine weitestgehend kontinuierliche Förderung des Ernteguts sowie gleichmäßige Belastung des zugehörigen Antriebsstrangs zu erzielen.

In Bezug auf den durchströmten Erntegutkanal weisen derartige Schneidvorrichtungen eine Vielzahl in Reihe nebeneinander angeordneter Messer auf, wobei die Anzahl nebeneinander in den Erntegutkanal ragender Messer die Anzahl wirksamer Schnittkanten und damit eine erzielbare Schnittlänge des Ernteguts vorgibt. Es ist allgemein wünschenswert, unterschiedliche Messeranzahlen verwenden zu können, um sich dem jeweiligen Einsatzzweck bzw. den Erntebedingungen anzupassen. Zum Schutz der Messer vor Beschädigungen durch Steine oder sonstige allgemein nicht zerkleinerbare Partikel und zur Ermöglichung einer Auswahl einer gewünschten Messeranzahl ist es üblich, die Messer derart schwenkbar gegenüber einem Rahmen der Schneidvorrichtung zu lagern, dass sich jedes Messer zwischen einer Außerbetriebsposition und einer Betriebsposition verschwenken lässt. In der Außerbetriebsposition befindet sich das Messer dagegen in einer Stellung, in der es aus dem Erntegutkanal weitestgehend zurückgezogen ist, das Erntegut also nicht schneidet. In der Betriebsposition befindet sich das Messer dabei in einer Stellung, in der es so in den Erntegutkanal hineinragt, dass vorbeiströmendes Erntegut in Zusammenwirkung mit dem Messer zerkleinert wird. Zum Spannen und anschließenden Halten des Messers in der Betriebsposition ist jedem Messer eine Spanneinheit zugeordnet, die beispielsweise über ein Federelement verfügt. Eine gemeinsame, bewegbare Stelleinrichtung dient dazu, die Spanneinheiten die Messer zusammen von der Außerbetriebsposition in die Betriebsposition zu schwenken.

Gemäß einer neuartigen Bauform beschriebener Schneidvorrichtungen weisen diese unter anderem eine Schaltwelle auf, die Teil eines Auswählmechanismus für die Spanneinheiten ist (siehe z.B. EP-A-03 41508). Dabei dient diese Schaltwelle dazu, ausgewählte Spanneinheiten von einem inaktiven Zustand, in dem diese ohne Eingriff mit der gemeinsamen Stelleinrichtung sind, in einen aktiven Zustand zu bewegen, in dem diese mit der gemeinsamen Stelleinrichtung in Eingriff stehen. Die Schaltwelle ist dazu derart ausgebildet und in der Schneidvorrichtung angeordnet, dass abhängig von deren Drehstellung die Lage einzelner Spanneinheiten beeinflussbar ist. Hierzu sind auf der Schaltwelle Nocken vorgesehen, durch deren Kontakt (bzw. Nichtkontakt) mit jeweiligen Spanneinheiten eine gewünschte Schaltung vorgenommen werden kann. Aufgrund steigender Messeranzahlen in Schneidvorrichtungen sowie der Anforderung, unterschiedliche Anzahlen von Messern leicht einstellen zu können, müssen auf der Schaltwelle eine Vielzahl genau platzierter Nocken vorgesehen sein. Die Herstellung einer solchen Schaltwelle stellt somit eine Herausforderung dar. Eine einteilige Fertigung der Schaltwelle beispielweise als Schmiedeteil wäre kostenmäßig sehr aufwändig. Andererseits würde eine Montage einzelner Nocken auf einem Wellenkern schon aufgrund der Vielzahl zu verbauender Einzelteile einen hohen und fehlerträchtigen Montageaufwand darstellen.

Es ist daher Aufgabe der vorliegenden Erfindung, ein einfach durchzuführendes und kostengünstiges Herstellverfahren für eine zum genannten Zweck geeignete Schaltwelle anzugeben, wobei die Schaltwelle eine erforderliche Festigkeit aufweisen soll. Daneben soll eine Schaltwelle angegeben werden.

Die genannte Aufgabe wird gelöst durch ein Verfahren nach Anspruch 1. Dieses umfasst erfindungsgemäß die Schritte:
Positionierung eines ersten gebogenen Blechelements auf einem vierkantigen Wellenkern,
Verschweißen des ersten gebogenen Blechelements mit dem Wellenkern,
Anordnung eines dritten gebogenen Blechelements und eines vierten gebogenen Blechelements an einem zwischen diesen liegenden zweiten gebogenen Blechelement derart, dass das zweite, dritte und vierte Blechelement eine miteinander verkettete Struktur bilden,
Aufbringen der verketteten Struktur auf den mit dem ersten gebogenen Blechelement verschweißten Wellenkern und Verschweißen damit.

Das Verfahren bietet den Vorteil, dass die Schaltwelle ganz unabhängig von deren Länge bzw. der Anzahl damit zu schaltender Messer aus im Wesentlichen fünf Einzelteilen herstellbar ist. Neben einer durch den Wellenkern gewährleisteten hinreichenden Festigkeit ist das Herstellverfahren daher verhältnismäßig einfach und fehlerfrei durchzuführen, da nur wenige Teile zu handhaben sind.

Gemäß einer vorteilhaften Weiterbildung des Verfahrens wird dabei ein gebogenes Blechelement hergestellt, indem ein ursprünglich in der Grundform etwa rechteckiges Blech etwa in U-Form (vorzugsweise mit leicht geöffneten Schenkeln) gebogen wird, wobei ein dabei entstehender zentraler Krümmungsabschnitt des gebogenen Blechelements einen Nocken der entstehenden Schaltwelle bildet. Eine derartige Herstellung hat den Vorteil, dass der so erzeugte Nocken - abhängig vom gewählten Krümmungsradius im Krümmungsabschnitt - einen geringen Reibwiderstand aufweisen kann, wodurch die Schaltung mittels der Schaltwelle leichter durchführbar ist.

Zur Erzielung einer unterschiedlichen Messerauswahl in verschiedenen Drehstellungen der Schaltwelle wird vorzugsweise in einem gebogenen Blechelement vor dem Schritt des Biegens eine Anzahl von Ausnehmungen ausgebildet, um den Krümmungsabschnitt des entstehenden Nockens in axialer Richtung abschnittsweise zu unterbrechen, so dass der Nocken nur noch an verbleibenden Stegen wirksam ist.

Dabei weist vorzugsweise zumindest eines der gebogenen Blechelemente eine von anderen gebogenen Blechelementen abweichende Anzahl von Stegen auf. Eine derartige Maßnahme ist zweckmäßig, um abhängig vom Drehwinkel der Schaltwelle eine unterschiedliche Schaltwirkung mit der Schaltwelle zu gewährleisten. Unterschiedliche Anordnungen der Stege sind denkbar.

Gemäß einer vorteilhaften Weiterbildung des Verfahrens weist das erste gebogene Blechelement gar keine Ausnehmungen auf - sondern stellt eine durchgängige Nocke dar -, hingegen weisen das zweite und das vierte gebogene Blechelement eine Anzahl von Stegen auf, die etwa der Hälfte der Gesamtmesserzahl der Schneideinrichtung entspricht. Das dritte gebogene Blechelement weist wiederum eine Anzahl von Stegen auf, die etwa dem Viertel der Gesamtmesserzahl der Schneideinrichtung entspricht.

Die genannte Aufgabe wird weiterhin gelöst durch eine Schaltwelle für eine Schneidvorrichtung, umfassend einen Wellenkern mit quadratischem Querschnitt sowie vier um den Wellenkern herum angeordnete und mit diesem verschweißte gebogene Blechelemente. Vorzugsweise sind die Blechelemente in Bezug auf die Axialrichtung der Welle etwa sternförmig abragend vom Wellenkern angeordnet.

Eine gute Festigkeit der miteinander verbundenen Teile der Schaltwelle ergibt sich vorteilhaft, indem die gebogenen Blechelemente - in Axialrichtung der Schaltwelle gesehen - etwa eine U-Form mit gegenüberliegenden Schenkelabschnitten und einem zentralen Krümmungsabschnitt aufweisen, wobei die jeweiligen Schenkelabschnitte den Wellenkern kontaktieren und der Krümmungsabschnitt dem Wellenkern abgewandt ist, um einen Nocken zu bilden.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung. Es zeigen:
- Fig. 1: eine Ballenpresse in schematischer Seitenansicht,
- Fig. 2: eine Schneidvorrichtung in perspektivischer Ansicht,
- Fig. 3: die Schneidvorrichtung in Seitenansicht, wobei ein gezeigtes Messer der Schneidvorrichtung eine Außerbetriebsposition einnimmt,
- Fig. 4: die Schneidvorrichtung in Seitenansicht, wobei ein gezeigtes Messer der Schneidvorrichtung eine Betriebsposition einnimmt,
- Fig. 5: die fünf wesentlichen Elemente einer erfindungsgemäßen Schaltwelle,
- Fig. 6: einen Herstellzustand der Schaltwelle gemäß drittem Verfahrensschritt,
- Fig. 7: die fertige Schaltwelle im axialen Schnitt sowie in perspektivischer Ansicht.

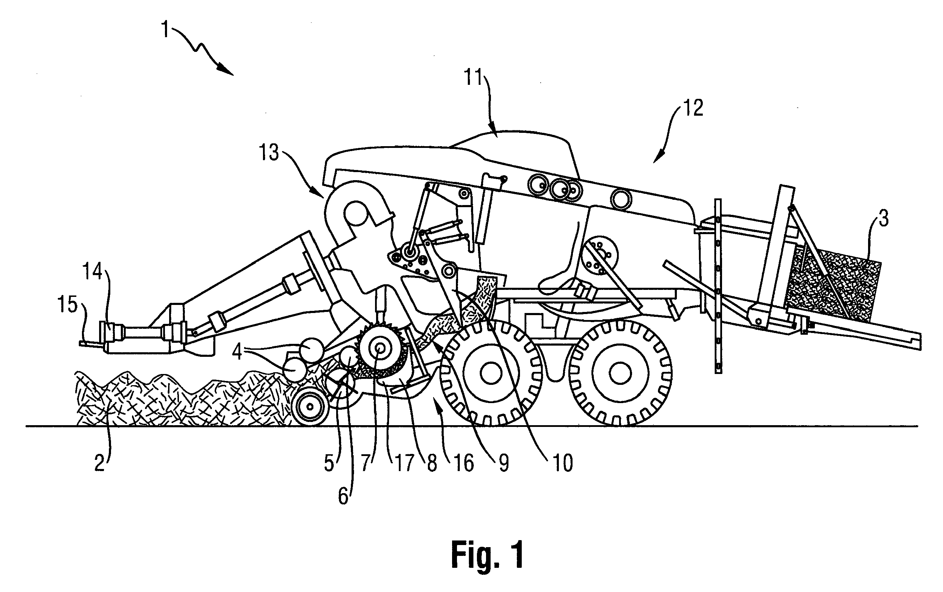

Fig. 1 zeigt eine Ballenpresse 1 in Form einer Quaderballenpresse bei der Erntefahrt in schematischer Seitenansicht. Im Erntebetrieb nimmt die Ballenpresse 1 auf dem Feldboden liegendes Erntegut 2, beispielsweise zum Schwad gelegtes Stroh auf und verarbeitet dieses zu quaderförmig gepressten und mit Bindegarn verschnürten Ballen 3, die nach Fertigstellung heckseitig aus der Ballenpresse 1 ausgeworfen werden.

Dazu nimmt die Ballenpresse 1 das Erntegut 2 mittels einer mit Zinken besetzten rotierenden Aufsammeltrommel 5 vom Boden auf, um es in Zusammenwirkung mit zwei darüberliegenden Niederhalterollen 4 den weiteren Förder- und Verarbeitungseinrichtungen der Ballenpresse 1 zuzuführen. Als nächstes wird das Erntegut 2 von einem Förderorgan 6, beispielsweise einer Querförderschnecke, von einer ursprünglichen Aufnahmebreite der Aufsammeltrommel 5 auf eine geringere Breite des Zuführkanals 9 zusammengeführt und mittels auf dem Förderorgan 6 mittig angeordneter Förderpaddel (nicht dargestellt) zum nachgelagerten (Schneid-) Rotor 7 gefördert. Der Rotor 7 weist über dessen Breite eine Vielzahl von zueinander beabstandeten Rotorsternen auf. Die Rotorsterne sind beispielsweise wendelförmig auf dem Rotor 7 angeordnet, um eine gleichmäßige Förderwirkung sowie eine gleichmäßige Belastung des zugehörigen Antriebsstrangs zu erzielen.

Unterhalb des Rotors 7 ist eine zunächst schematisch dargestellte Schneidvorrichtung 16 angeordnet. Die Schneidvorrichtung 16 weist im Wesentlichen eine Vielzahl von Messern 8 auf, die in Bezug auf den Zuführkanal 9 quer zur Förderrichtung des Ernteguts 2 nebeneinander angeordnet sind. Demzufolge ist nur ein in der Zeichnungsansicht vorderes (in Fahrtrichtung der Presse 1 gesehen linkes) Messer 8 der Schneidvorrichtung 16 zu sehen, das - wie auch die übrigen Messer 8 - um eine quer zur Gutförderrichtung verlaufende Messerachse 17 verschwenkbar ist. Jedes Messer 8 ist so zwischen einer Außerbetriebsposition, in der es nicht in den Erntegutkanal hineinragt, und einer Betriebsposition verschwenkbar, in der es in den Erntegutkanal hineinragt. Befindet sich ein Messer 8 (bzw. eine Vielzahl oder sämtliche der Messer 8) in der Betriebsposition, so wird das den Zuführkanal 9 durchströmende Erntegut 2 durch kämmende Zusammenwirkung von Rotor 7 (dessen Rotorsternen) und dem jeweiligen Messer 8 zerkleinert, insbesondere geschnitten.

Nach Passieren der Schneidvorrichtung 16 wird das Erntegut 2 von einem Sammelhübe durchführenden Raffer 10 gesammelt, der dann portionsweise eine darüberliegende Presskammer 11 befüllt. Nach dem dort stattfindenden Pressvorgang dient eine Knoteinrichtung 12 dazu, den gepressten Ballen 3 mit Bindegarn zu verschnüren, um diesen fertig zu stellen. Heckseitig der Ballenpresse 1 erfolgt anschließend der Ballenabwurf.

Frontseitig der Ballenpresse 1 befindet sich eine Zugdeichsel 15, mit der die Ballenpresse 1 von einem Zugfahrzeug wie einem Traktor (nicht dargestellt) gezogen und von diesem angetrieben wird. Zum Antrieb der Förder- und Verarbeitungseinrichtungen der Ballenpresse 1 dient eine mit dem Traktor koppelbare Hauptantriebswelle 14, die in einem Hauptgetriebe 13 mündet.

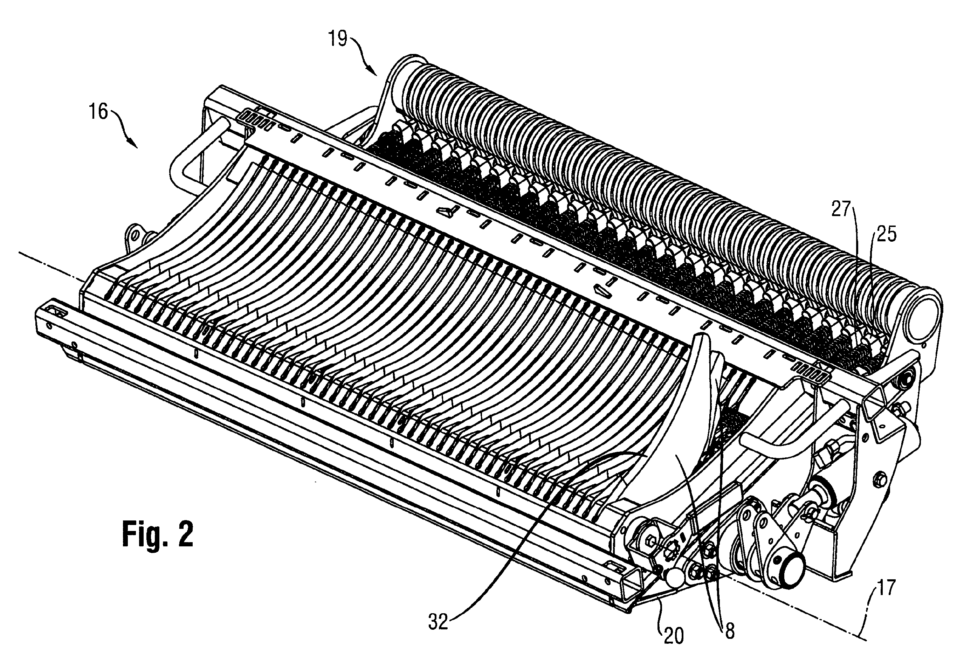

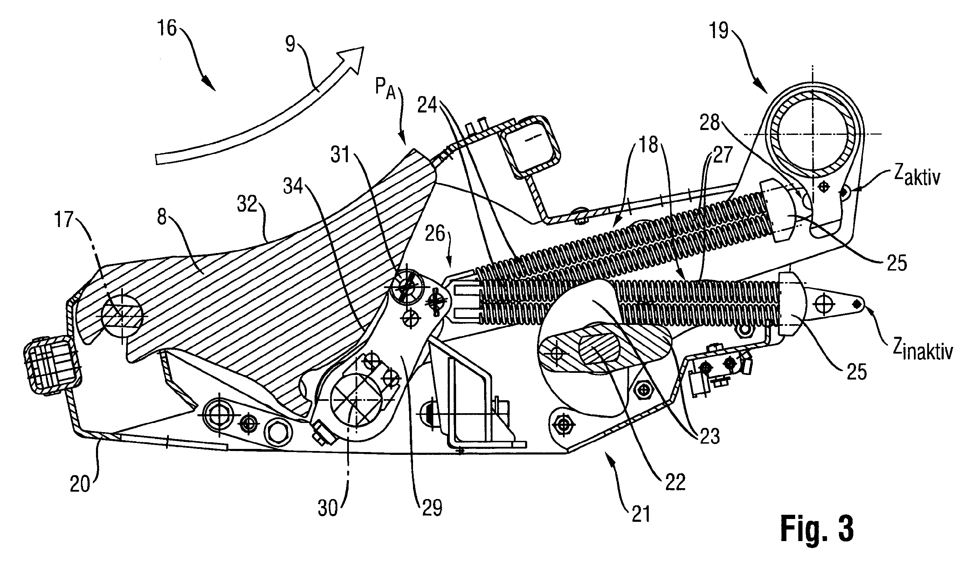

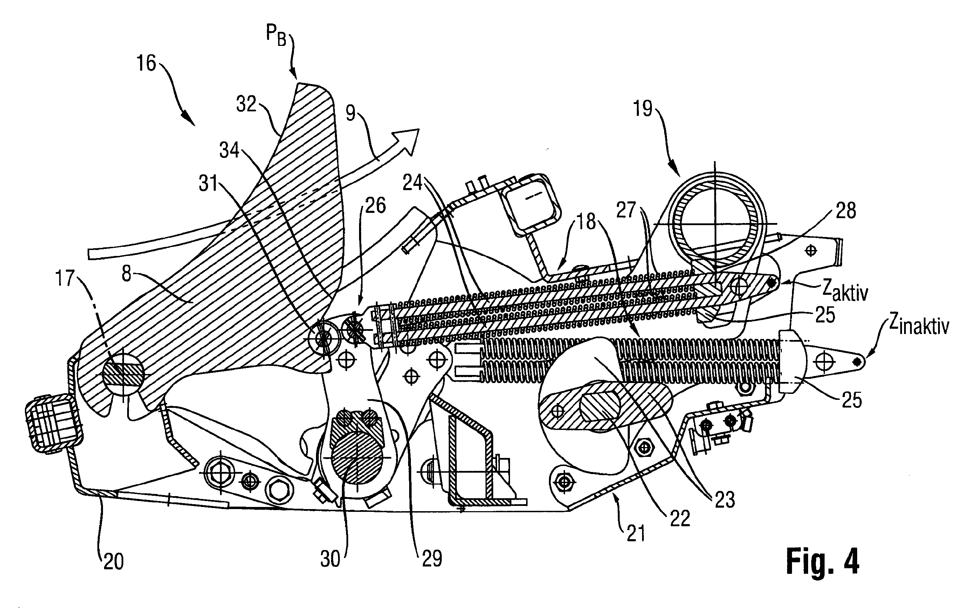

Fig. 2 zeigt nun in eine Schneidvorrichtung 16, die in die Ballenpresse 1 gemäß Fig. 1 eingebaut sein kann, in perspektivischer Ansicht. Die Schneidvorrichtung 16 baut auf einen Rahmen 20 auf, gegenüber dem eine Vielzahl von Messern 8 um die Messerachse 17 schwenkbar gelagert sind. Die Messer 8 liegen mit nach vorn oben (bezogen auf die Einbauposition in der Ballenpresse 1 gemäß Fig. 1) weisenden Schneidkanten 32 bettartig nebeneinander in dem Rahmen 20. Gemäß Fig. 2 befindet sich die Mehrzahl der Messer 8 in einer Außerbetriebsposition, weshalb diese weitestgehend nicht sichtbar (weil versenkt) sind. Lediglich ein in der Zeichnungsansicht vorderes und ein dahinter liegendes Messer 8 sind zur Veranschaulichung aus der Außerbetriebsposition nach oben verschwenkt. Die Funktionsweise der Schneidvorrichtung 16 wird im Folgenden näher anhand der Fig. 3 und 4 erläutert. Dabei zeigen die Fig. 3 und 4 jeweils die Schneidvorrichtung 16 im seitlichen Schnitt in unterschiedlichen Zuständen.

In Fig. 3 befindet sich ein Messer 8 der Schneidvorrichtung 16 in einer Außerbetriebsposition P_{A}. In dieser Position ragt das Messer 8 nicht in den mittels Pfeil (Gutstromrichtung) angedeuteten Zuführkanal 9 hinein und ist damit nicht wirksam. Im bezogen auf die Gutstromrichtung vorderen Bereich stützt sich das Messer 8 auf der Messerachse 17 ab und ist um diese verschwenkbar. Jedem der Messer 8 ist eine Spanneinheit 18 zugeordnet, die mit einer gemeinsamen Stelleinrichtung 19 in Eingriff gebracht werden kann, um das Messer 8 von der gezeigten Außerbetriebsposition P_{A} in eine in Fig. 4 gezeigte Betriebsposition P_{B} zu verschwenken bzw. in der Betriebsposition P_{B} zu halten. Im Wesentlichen umfasst eine Spanneinheit 18 einen Stößel 24, der einen Endes mit der gemeinsamen Stelleinrichtung 19 in Eingriff bringbar ist und anderen Endes mittelbar - oder unmittelbar - Druck auf einen rückseitigen Bereich (hier: Fersenbereich) des Messers 8 ausüben kann. In der Darstellung weist der Stößel 24 dazu einen endseitig abgerundeten Druckkopf 25 auf. Der abgerundete Druckkopf 25 ist in der Form einer an der gemeinsamen Stelleinrichtung 19 ausgebildeten Mulde 28 angepasst, d.h. komplementär dazu ausgebildet, so dass bei einer Bewegung der gemeinsamen Stelleinrichtung 19 in Richtung des Messers 8 der Druckkopf 25 sicher in Eingriff mit der Stelleinrichtung 19 stehen kann, nämlich wenn sich die jeweilige Spanneinheit 18 in einem aktiven Zustand Zₐₖₜᵢᵥ befindet.

Der Druckkopf 25 ist in Längsrichtung des Stößels 24 längsverschiebbar, wobei zwei parallel angeordnete Spiralfedern 27 mit zunehmender Verschiebung des Druckkopfes 25 in Richtung eines Fußabschnitts 26 des Stößels eine zunehmende Rückstellkraft ausüben. Die so realisierte effektive Längenveränderbarkeit des Stößels 24 mittels Federanordnung (Spiralfedern 27) dient insbesondere zur Gewährleistung einer Sicherheitsabschaltung des jeweiligen Messers 8 im Überlastfall, wie beispielsweise bei Kontakt des Messers 8 mit Fremdkörpern.

Ein dem Druckkopf 25 abgewandter Fußabschnitt 26 des Stößels 24 ist im gezeigten Beispiel kinematisch gekoppelt mit einem Stellhebel 29, der wiederum um eine Schwenkachse 30 gegenüber dem Rahmen 20 schwenkbar ist. An dem der Schwenkachse 30 abgewandten freien Ende des Stellhebels 29 stützt sich einerseits der gelenkig verbundene Fußabschnitt 26 des Stößels 24 ab. Daneben ist an diesem freien Ende des Stellhebels 29 eine drehbare Rolle 31 angebracht, die in Rollkontakt mit einem rückseitigen Abschnitt 34 des Messers 8 steht. Der von der Rolle 31 kontaktierbare rückseitige Abschnitt 34 des Messers 8 weist einen derartigen Verlauf auf, dass in der Außerbetriebsposition P_{A} des Messers 8 die Rolle 31 von der Messerachse 17 weiter beabstandet ist als in der Betriebsposition P_{B} (vgl. Fig. 4). Der rückseitige Abschnitt 34 verläuft dazu mit sich gegenüber der Messerachse 17 veränderndem Abstand, wobei zur Vorgabe einer Betriebsposition P_{B} im Fersenbereich des Messers 8 eine die Rolle 31 teilweise aufnehmende Mulde ausgebildet ist.

In Fig. 4 befindet sich ein Messer 8 der Schneidvorrichtung 16 somit in einer Betriebsposition P_{B}. In dieser Position ragt das Messer 8 in den mittels Pfeil (Gutstromrichtung) angedeuteten Zuführkanal 9 hinein und ist damit wirksam. Über die Rolle 31, den Stellhebel 29, den Stößel 24 einschließlich Federanordnung und Druckkopf 25 übt dabei die gemeinsame Stelleinrichtung 19, die beispielsweise über (nicht dargestellte) außenseitig der Schneidvorrichtung 16 angeordnete Stellzylinder betätigbar ist, die zum Halten des Messers 8 in der Betriebsposition P_{B} erforderliche Haltekraft aus. Aufgrund der Längennachgiebigkeit des Stößels 24 ist die Möglichkeit einer Sicherheitsabschaltung des Messers 8 gewährleistet.

Zur Auswahl einer gewünschten Anzahl von Messern 8 verfügt die Schneidvorrichtung 16 über einen den Spanneinheiten 18 zugeordneten gemeinsamen Auswählmechanismus 21. Dieser Auswählmechanismus 21 ermöglicht es, ausgewählte Spanneinheiten 18, d.h. Spanneinheiten 18, deren Messer 8 in die Betriebsposition P_{B} gebracht werden sollen, von einem inaktiven Zustand Zᵢₙₐₖₜᵢᵥ, in dem diese ohne Eingriff mit der gemeinsamen Stelleinrichtung 19 sind, in einen aktiven Zustand Zₐₖₜᵢᵥ zu bewegen, in dem diese mit der gemeinsamen Stelleinrichtung 19 in Eingriff stehen.

In den Fig. 3 und 4 sind jeweils die Spanneinheiten 18 eines vorderen Messers 8 und eines dahinter liegenden Messers 8 zumindest teilweise zu sehen. Dabei befindet sich in Fig. 3 die Spanneinheit 18 des vorderen Messers 8 im inaktiven Zustand Zᵢₙₐₖₜᵢᵥ, d.h. steht nicht im Eingriff mit der gemeinsamen Stelleinrichtung 19. Die Spanneinheit 18 des dahinter liegenden (verdeckten) Messers 8 befindet sich dagegen im aktiven Zustand Zₐₖₜᵢᵥ, da diese im hinteren Bereich so angehoben ist, dass sich deren Druckkopf 25 im Bereich der Mulde 28 der gemeinsamen Stelleinrichtung 19 befindet. Eine Bewegung der gemeinsamen Stelleinrichtung 19 in Richtung der Messer 8 hätte ausgehend vom Zustand in Fig. 3 demnach zur Folge, dass sich lediglich das hintere (verdeckte) Messer 8 in die Betriebsposition P_{B} bewegt, während das vordere Messer 8 aufgrund des inaktiven Zustands Zᵢₙₐₖₜᵢᵥ der zugehörigen Spanneinheit 18 in der Außerbetriebsposition P_{A} verbleibt.

Zur Bewegung einzelner Spanneinheiten 18 vom inaktiven in den aktiven Zustand dient eine parallel zur Messerachse 17 verlaufende drehbare Schaltwelle 22, die über die Breite der Schneidvorrichtung 16 mit einer Vielzahl von Nockenelementen 23 versehen ist. Die Schaltwelle 22 ist drehbar unterhalb der Spanneinheiten 18 gelagert. Abhängig von der Drehstellung der Schaltwelle 22 geraten einzelne Nockenelemente 23 mit Kontaktabschnitten der Spanneinheiten 18 (insbesondere mit Außenbereichen der Spiralfedern 27) in Kontakt und heben dann die jeweilige Spanneinheit 18 an, um diese von einer in der Zeichnung etwa waagerechten Lage (entsprechend dem inaktiven Zustand Zᵢₙₐₖₜᵢᵥ) in eine zur gemeinsamen Stelleinrichtung 19 leicht ansteigende Lage (entsprechend dem aktiven Zustand Zₐₖₜᵢᵥ) anzuheben. Umgekehrt bewirkt die Lage der Spanneinheiten 18 oberhalb der Schaltwelle 22, dass eine nicht von einem Nockenelement 23 angehobene Spanneinheit 18 schwerkraftbedingt zurück in den inaktiven Zustand Zᵢₙₐₖₜᵢᵥ zurückfällt, wenn diese nicht unter Spannung durch die gemeinsame Stelleinrichtung 19 steht.

In Fig. 4 ist ein Zustand der Schneidvorrichtung 16 gezeigt, bei dem die Spanneinheit 18 des vorderen Messers 8 aktiviert wurde und deren Druckkopf 25 im Eingriff mit der bereits in Richtung Messer 8 nach vorn bewegten gemeinsamen Stelleinrichtung 19 steht, so dass das vordere Messer 8 in der Betriebsposition P_{B} gehalten wird. Es ist zu sehen, dass aufgrund der Bewegung der gemeinsamen Stelleinrichtung 19 in Richtung Messer 8 die Spanneinheit 18 leicht vom zugehörigen Nocken 23 der Schaltwelle 22 abgehoben ist. Die untere Spiralfeder 27 der Spanneinheit 18 steht also nicht mehr in Kontakt mit dem Nocken 23, wodurch auch kein Reibverschleiß (z.B. verursacht durch Vibrationen oder Stellbewegungen) an den betroffenen Bauteilen auftritt.

Abhängig von der Gestaltung der Nockenelemente 23 auf der Schaltwelle 22 lässt sich allein durch Drehung der Schaltwelle 22 eine jeweils unterschiedliche Auswahl von Messern 8 treffen, die durch eine Zustellbewegung der Stelleinrichtung 19 von der Außerbetriebsposition P_{A} in die Betriebsposition P_{B} verbracht werden. Dabei werden stets nur die Spanneinheiten 18 von der gemeinsamen Stelleinrichtung 19 mitgenommen - und somit gespannt -, die per Auswahl aktiviert wurden. Übrige nicht aktivierte Spanneinheiten 18 verbleiben in deren waagerechter Ruheposition. Die vorliegende Erfindung bezieht sich auf ein Verfahren zur Herstellung einer diesem Zweck dienenden Schaltwelle 22.

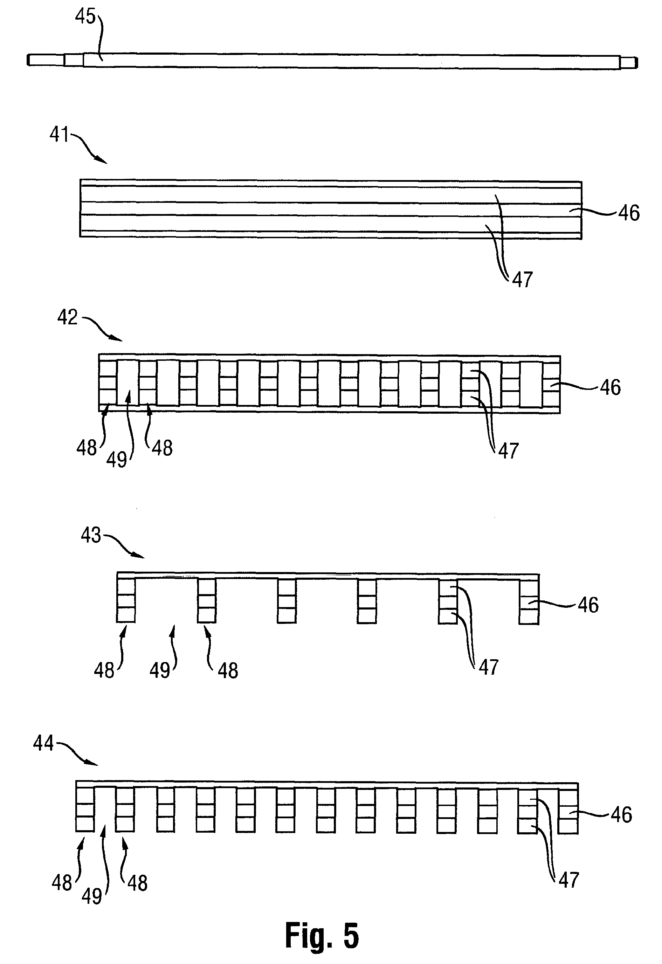

Zur Erläuterung zeigt Fig. 5 einen Ausgangszustand für die Herstellung der Schaltwelle 22. Als wesentliche Elemente werden dazu benötigt: ein Wellenkern 45 mit (zumindest im mittigen Bereich) quadratischem Querschnitt sowie ein erstes gebogenes Blechelement 41, ein zweites gebogenes Blechelement 42, ein drittes gebogenes Blechelement 43 und ein viertes gebogenes Blechelement 44. Es handelt sich bei den gebogenen Blechelementen 41, 42, 43, 44 um Blechteile, die ursprünglich eine rechteckige Grundform aufwiesen, jedoch zuvor in eine - in Axialrichtung der späteren Schaltwelle 22 gesehen - U-Form gebogen wurden. Jedes der gebogenen Blechelemente 41, 42, 43, 44 weist demnach einen zentralen Krümmungsabschnitt 46 sowie zwei beidseitig angrenzende Schenkelabschnitte 47 auf.

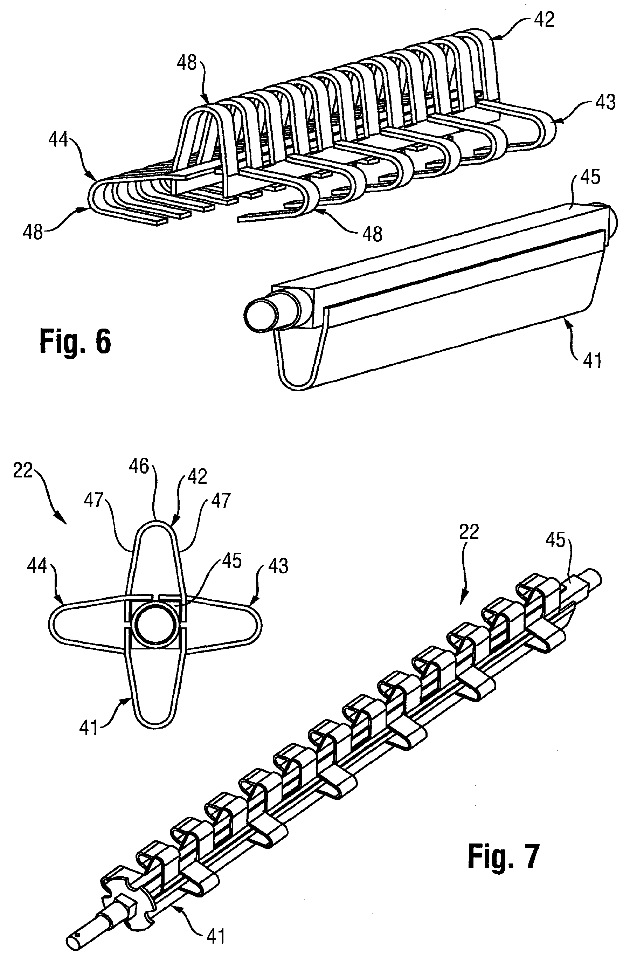

Ausgehend von den in Fig. 5 dargestellten Ausgangselementen erfolgt die Herstellung der Schaltwelle indem zunächst das erste gebogene Blechelement 41 auf dem vierkantigen Wellenkern 45 positioniert wird. Dazu wird das erste gebogene Blechelement 41 mit dessen Schenkelabschnitten 47 mit gegenüberliegenden Kanten des Wellenkerns 45 in überlappenden Kontakt gebracht, wie in der unteren Darstellung von Fig. 6 zu sehen. Der Wellenkern 45 und das erste gebogene Blechelement 41 werden miteinander verschwei ßt.

Daneben werden gemäß der oberen Darstellung der Fig. 6 das dritte gebogene Blechelement 43 und das vierte gebogene Blechelement 44 an einem zwischen diesen liegenden zweiten gebogenen Blechelement 42 derart angeordnet, dass das zweite, dritte und vierte gebogene Blechelement 42, 43, 44 eine miteinander verkettete Struktur bilden. Diese ergibt sich dadurch, dass das zweite gebogene Blechelement 42 ausschließlich geschlossene Ausnehmungen 49 aufweist, wobei das dritte und vierte gebogene Blechelement 43, 44 jeweils zum einen Schenkelabschnitt 47 offene Ausnehmungen 49 aufweisen (vgl. Fig. 5), so dass zur Bildung der in Fig. 6 (oben) gezeigten verketteten Struktur die offenen Schenkelabschnitte 47 des dritten und vierten gebogenen Blechelements 43, 44 durch die Ausnehmungen 49 des zweiten gebogenen Blechelements 42 von innen hindurchgeführt werden. Durch die verkettete Anordnung wird vorteilhaft gewährleistet, dass die Blechelemente 42, 43, 44 für nach nachfolgenden Herstellschritt zueinander in Position gehalten werden.

Die so geschaffene verkettete Struktur wird in einem abschließenden Verfahrensschritt auf den mit dem ersten gebogenen Blechelement 41 verschweißten Wellenkern 45 aufgebracht und damit verschweißt. Als Ergebnis ergibt sich die in Fig. 7 dargestellte Schaltwelle 22. Diese umfasst erfindungsgemäß einen Wellenkern 45 mit quadratischem Querschnitt sowie vier um den Wellenkern 45 herum angeordnete und mit diesem verschweißte gebogene Blechelemente 41, 42, 43, 44. Dabei weisen die gebogenen Blechelemente 1, 42, 43, 44 in Axialrichtung der Schaltwelle 22 etwa eine U-Form mit gegenüberliegenden Schenkelabschnitten 47 und einem zentralen Krümmungsabschnitt 46 auf, wobei die jeweiligen Schenkelabschnitte 47 den Wellenkern 45 kontaktieren und der Krümmungsabschnitt 46 dem Wellenkern 45 abgewandt ist, um einen Nocken der Schaltwelle 22 zu bilden.

Bei dem gezeigten Ausführungsbeispiel der Schaltwelle 22 gemäß Fig. 7 weist das erste gebogene Blechelement 41 keinerlei Ausnehmungen auf. Das zweite gebogene Blechelement 42 weist 12 Stege 48 auf, das dritte gebogene Blechelement 43 weist 6 Stege 48 auf, und das vierte gebogene Blechelement 44 weist 13 Stege 48 auf. Wird die Schaltwelle 22 in eine Schneidvorrichtung mit beispielsweise 25 Messern eingebaut, können sich durch Drehung der Schaltwelle 22 unterschiedliche Messerzahlen in die Betriebsposition bringen lassen, insbesondere nämlich 25, 13, 12 oder 6 Messer.

Auf gleiche Weise ließe sich die Schaltwelle 22 auch für davon abweichende Messerzahlen ausführen, beispielsweise auf eine Gesamtmesserzahl von 51. In diesem Fall würde das zweite gebogene Blechelement 42 beispielsweise 13 Stege 48 aufweisen, das dritte gebogene Blechelement 43 würde 12 Stege 48 aufweisen, und das vierte gebogene Blechelement 44 würde 26 Stege 48 aufweisen. Wird die Schaltwelle 22 dann in eine Schneidvorrichtung 16 gemäß den Fig. 2 bis 4 mit 51 Messern 8 eingebaut, können sich durch Drehung der Schaltwelle 22 unterschiedliche Messerzahlen in die Betriebsposition P_{B} bringen lassen, insbesondere nämlich 51, 26, 13 oder 12 Messer 8.

Mit dem beschriebenen Herstellverfahren bzw. der beschriebenen Schaltwelle 22 werden unterschiedliche Vorteile erzielt. Eine ausreichende Festigkeit der Schaltwelle 22 wird erreicht. Aufgrund der geringen Anzahl benötigter Bauelemente ist die Montage einfach und wenig fehleranfällig. Bei Ausbildung eines großen Krümmungsradius der zentralen Krümmungsabschnitte 46 der gebogenen Blechelemente 41, 42, 43, 44 ergibt sich ein leichtgängiges Rutschen zwischen den gebildeten Nocken 23 in Zusammenwirkung mit den Spanneinheiten 18 einer Schneidvorrichtung 16. Durch die vorgefertigten Blechelemente 41, 42, 43, 44 werden Fertigungsungenauigkeiten insbesondere hinsichtlich der axialen Lage der Stege 48 bzw. Ausnehmungen 49 vermieden. Im Ergebnis ist die Herstellung der Schaltwelle verhältnismäßig kostengünstig.

**Bezugszeichenliste**

| | | | |
|---|---|---|---|
| 1 | Ballenpresse | 28 | Mulde |
| 2 | Erntegut | 29 | Stellhebel |
| 3 | Ballen | 30 | Schwenkachse |
| 4 | Niederhalterollen | 31 | Rolle |
| 5 | Aufsammeltrommel | 32 | Schneidkante |
| 6 | Förderorgan | 33 | Stellzylinder |
| 7 | Rotor | 34 | rückseitiger Abschnitt |
| 8 | Messer | | |
| 9 | Zuführkanal | 41 | erstes gebogenes Blechelement |
| 10 | Raffer | 42 | zweites gebogenes Blechelement |
| 11 | Presskammer | 43 | drittes gebogenes Blechelement |
| 12 | Knoteinrichtung | 44 | viertes gebogenes Blechelement |
| 13 | Hauptgetriebe | 45 | Wellenkern |
| 14 | Hauptantriebswelle | 46 | zentraler Krümmungsabschnitt |
| 15 | Zugdeichsel | 47 | Schenkelabschnitt |
| 16 | Schneidvorrichtung | 48 | Steg |
| 17 | Messerachse | 49 | Ausnehmung |
| 18 | Spanneinheit | | |
| 19 | Stelleinrichtung | P_{A} | Au ßerbetriebsposition |
| 20 | Rahmen | P_{B} | Betriebsposition |
| 21 | Auswählmechanismus | Zₐₖₜᵢᵥ | aktiver Zustand |
| 22 | Schaltwelle | Zᵢₙₐₖₜᵢᵥ | inaktiver Zustand |
| 23 | Nocken | | |
| 24 | Stößel | | |
| 25 | Druckkopf | | |
| 26 | Fußabschnitt | | |
| 27 | Spiralfeder | | |

## Patentansprüche

1. Verfahren zur Herstellung einer Schaltwelle (22) für die Schneideinrichtung (16) einer landwirtschaftlichen Ballenpresse (1) oder eines landwirtschaftlichen Ladewagens, umfassend die Schritte:
Positionierung eines ersten gebogenen Blechelements (41) auf einem vierkantigen Wellenkern (45),
Verschweißen des ersten gebogenen Blechelements (41) mit dem Wellenkern (45),
Anordnung eines dritten gebogenen Blechelements (43) und eines vierten gebogenen Blechelements (44) an einem zwischen diesen liegenden zweiten gebogenen Blechelement (42) derart, dass das zweite, dritte und vierte Blechelement (42, 43, 44) eine miteinander verkettete Struktur (42, 43, 44) bilden,
Aufbringen der verketteten Struktur (42, 43, 44) auf den mit dem ersten gebogenen Blechelement (41) verschweißten Wellenkern (45) und Verschweißen damit.

2. Verfahren nach Anspruch 1, **dadurch gekennzeichnet, dass** ein gebogenes Blechelement (41, 42, 43, 44) hergestellt wird, indem ein ursprünglich in der Grundform etwa rechteckiges Blech etwa in U-Form gebogen wird, wobei ein dabei entstehender zentraler Krümmungsabschnitt (46) des gebogenen Blechelements (41, 42, 43, 44) einen Nocken (23) der entstehenden Schaltwelle (22) bildet.

3. Verfahren nach Anspruch 2, **dadurch gekennzeichnet, dass** in einem gebogenen Blechelement (42, 43, 44) vor dem Schritt des Biegens eine Anzahl von Ausnehmungen (49) ausgebildet wird, um den Krümmungsabschnitt (46) des entstehenden Nockens (23) in axialer Richtung abschnittsweise zu unterbrechen, so dass der Nocken (23) nur noch an verbleibenden Stegen (48) wirksam ist.

4. Verfahren nach einem der Ansprüche 1 bis 3, **dadurch gekennzeichnet, dass** zumindest eines der gebogenen Blechelemente (41, 42, 43, 44) eine von anderen gebogenen Blechelementen (41, 42, 43, 44) abweichende Anzahl von Stegen (48) aufweist.

5. Verfahren nach einem der Ansprüche 1 bis 4, **dadurch gekennzeichnet, dass** das erste gebogene Blechelement (41) keine Ausnehmungen (49) aufweist, das zweite und das vierte gebogene Blechelement (42, 44) eine Anzahl von Stegen (48) aufweist, die etwa der Hälfte der Gesamtmesserzahl (8) der Schneideinrichtung (16) entspricht, und das dritte gebogene Blechelement (43) eine Anzahl von Stegen (48) aufweist, die etwa dem Viertel der Gesamtmesserzahl (8) der Schneideinrichtung (16) entspricht.

6. Schaltwelle (22) für eine Schneidvorrichtung (16), vorzugsweise hergestellt nach einem Verfahren gemäß der Ansprüche 1 bis 5, umfassend einen Wellenkern (45) mit quadratischem Querschnitt sowie vier um den Wellenkern (45) herum angeordnete und mit diesem verschweißte gebogene Blechelemente (41, 42, 43, 44).

7. Schaltwelle (22) nach Anspruch 6, **dadurch gekennzeichnet, dass** die gebogenen Blechelemente (41, 42, 43, 44) in Axialrichtung der Schaltwelle (22) etwa eine U-Form mit gegenüberliegenden Schenkelabschnitten (47) und einem zentralen Krümmungsabschnitt (46) aufweisen, wobei die jeweiligen Schenkelabschnitte (47) den Wellenkern (45) kontaktieren und der Krümmungsabschnitt (46) dem Wellenkern (45) abgewandt ist, um einen Nocken (23) zu bilden.

## Claims

1. A process for the production of a shift shaft (22) for the cutting device (16) of an agricultural bale press (1) or an agricultural loading wagon, comprising the steps:
positioning a first bent plate element (41) on a four-edged shaft core (45),
welding the first bent plate element (41) to the shaft core (45),
arranging a third bent plate element (43) and a fourth bent plate element (44) at a second bent plate element (42) disposed between them in such a way that the second, third and fourth plate elements (42, 43, 44) form an interlinked structure (42, 43, 44), and
applying the interlinked structure (42, 43, 44) to the shaft core (45) welded to the first bent plate element (41) and welding thereto.

2. A process according to claim 1 **characterised in that** a bent plate element (41, 42, 43, 44) is produced by a plate which is originally approximately rectangular in basic shape being bent approximately into a U-shape, wherein a central curvature portion (46) produced **in that** way in the bent plate element (41, 42, 43, 44) forms a cam (23) of the resulting shift shaft (22).

3. A process according to claim 2 **characterised in that** a number of openings (49) is produced in a bent plate element (42, 43, 44) before the bending step in order to interrupt the curvature portion (46) of the resulting cam (23) portion-wise in the axial direction so that the cam (23) is only still operative at remaining lands (48).

4. A process according to one of claims 1 to 3 **characterised in that** at least one of the bent plate elements (41, 42, 43, 44) has a number of lands (48), that differs from other bent plate elements (41, 42, 43, 44).

5. A process according to one of claims 1 to 4 **characterised in that** the first bent plate element (41) has no openings (49), the second and the fourth bent plate elements (42, 44) have a number of lands (48), that approximately corresponds to half the total number of blades (8) of the cutting device (16) and the third bent plate element (43) has a number of lands (48) which approximately corresponds to a quarter of the total number of blades (8) of the cutting device (16).

6. A shift shaft (22) for a cutting device (16), preferably produced by a process according to claims 1 to 5, comprising a shaft core (45) of square cross-section and four bent plate elements (41, 42, 43, 44) arranged around and welded to the shaft core (45).

7. A shift shaft (22) according to claim 6 **characterised in that** the bent plate elements (41, 42, 43, 44) in the axial direction of the shift shaft (22) are approximately of a U-shape with oppositely disposed leg portions (47) and a central curvature portion (46), wherein the respective leg portions (47) contact the shaft core (45) and the curvature portion (46) faces away from the shaft core (45) to form a cam (23).

## Revendications

1. Procédé de fabrication d'un arbre de commande (22) pour le dispositif de coupe (16) d'une presse agricole à balles (1) ou d'un véhicule de chargement agricole, comprenant les étapes consistant à :
positionner un premier élément en tôle pliée (41) sur un noyau d'arbre carré (45),
souder le premier élément en tôle pliée (41) avec le noyau d'arbre (45),
disposer un troisième élément en tôle pliée (43) et un quatrième élément en tôle pliée (44) sur un deuxième élément en tôle pliée (42) situé entre ceux-ci, de façon que les deuxième, troisième et quatrième éléments en tôle (42, 43, 44) forment une structure solidaire (42, 43, 44),
rapporter la structure solidaire (42, 43, 44) sur le noyau d'arbre (45) soudé avec le premier élément en tôle pliée (41) et la souder avec celui-ci.

2. Procédé selon la revendication 1, **caractérisé en ce qu'**un élément en tôle pliée (41 42, 43, 44) est fabriqué en pliant sensiblement en forme de U une tôle ayant initialement une forme de base sensiblement rectangulaire, une partie de courbure centrale (46) ainsi produite de l'élément en tôle pliée (41, 42, 43, 44) formant une came (23) de l'arbre de commande (22) obtenu.

3. Procédé selon la revendication 2, **caractérisé en ce que**, avant l'étape de pliage, un certain nombre d'évidements (49) sont réalisés dans un élément en tôle pliée (42, 43, 44) afin d'interrompre par endroits, en direction axiale, la partie de courbure (46) de la future came (23), de sorte que la came (23) n'est plus active qu'au niveau de branches (48) restantes.

4. Procédé selon l'une des revendications 1 à 3, **caractérisé en ce qu'**au moins un des éléments en tôle pliée (41, 42, 43, 44) présente un nombre de branches (48) différent de celui des autres éléments en tôle pliée (41, 42, 43, 44).

5. Procédé selon l'une des revendications 1 à 4, **caractérisé en ce que** le premier élément en tôle pliée (41) ne présente aucun évidement (49), le deuxième et le quatrième élément en tôle pliée (42, 44) présentent un nombre de branches (48) correspondant à peu près à la moitié du nombre total de lames (8) du dispositif de coupe (16), et le troisième élément en tôle pliée (43) présente un nombre de branches (48) correspondant à peu près au quart du nombre total de lames (8) du dispositif de coupe (16).

6. Arbre de commande (22) pour un dispositif de coupe (16), fabriqué de préférence selon un procédé conforme aux revendications 1 à 5, comprenant un noyau d'arbre (45) à section transversale carrée ainsi que quatre éléments en tôle pliée (41, 42, 43, 44) disposés autour du noyau d'arbre (45) et soudés avec celui-ci.

7. Arbre de commande (22) selon la revendication 6, **caractérisé en ce que** les éléments en tôle pliée (41, 42, 43, 44) présentent, dans la direction axiale de l'arbre de commande (22), sensiblement une forme en U avec des parties d'ailes (47) en vis-à-vis et une partie de courbure (46) centrale, les parties d'ailes (47) respectives étant en contact avec le noyau d'arbre (45), et la partie de courbure (46) étant située à l'opposé du noyau d'arbre (45) pour former une came (23).
